Europäisches Patentamt

European Patent Office

Office européen des brevets

(11) Publication number: 0 397 339
A2

# EUROPEAN PATENT APPLICATION

(21) Application number: 90304317.2

(51) Int. Cl.⁵: B60S 1/08

(22) Date of filing: 23.04.90

(30) Priority: 06.05.89 GB 8910479

(43) Date of publication of application:
14.11.90 Bulletin 90/46

(84) Designated Contracting States:
DE ES FR SE

(71) Applicant: DELCO PRODUCTS OVERSEAS
CORPORATION
3044 West Grand Boulevard
Detroit Michigan 48202(US)

(72) Inventor: Bates, Trevor
25 Bibshall Crescent
Dunstable, Bedfordshire LU6 3NF(GB)

(74) Representative: Denton, Michael John et al
Patent Section Vauxhall Motors Limited 1st
Floor Gideon House 26 Chapel Street
Luton Bedfordshire LU1 2SE(GB)

(54) Wiper motor interference suppression.

(57) A wiper motor comprising an electric motor; an output gear (32) connected to, and rotatable by, the electric motor; a parking plate (30) secured to the output gear for rotation therewith; three contact fingers, one of which makes a continuous sliding electrical connection (P₂) with the parking plate, and the others making alternating sliding electrical connection (P₁,P₃) with the parking plate, the said other contact fingers being connectable across the poles of a power supply for the electric motor; and an electrical resistance (40) electrically connected between the said one contact finger and electrical ground. Provides reduced, or eliminates, radio interference noise associated with the parking plate and its connections.

Fig.4.

Fig.3.

## WIPER MOTOR INTERFERENCE SUPPRESSION

This invention relates to a wiper motor having a parking plate, and in particular an arrangement for suppressing radio interference generated by the wiper motor.

For the sake of clarity, the term wiper motor is hereby defined as an electric motor having an output gear for driving a windscreen wiper mechanism and blade for the front or rear windows of a motor vehicle, or for driving a wiper mechanism and blade for the headlights of a motor vehicle.

It is known to provide such wiper motors with a parking plate which operates to park the wiper blade in a predetermined position at the completion of the wiping action (when the wiper motor is switched off by the vehicle operator). In these known arrangements, the parking plate is electrically conductive, and is usually secured to the output gear of the wiper motor, to rotate therewith. Three contact fingers can make a sliding electrical connection with the parking plate, and the parking plate is shaped such that one of the contact fingers makes a continuous connection, whereas the other contact fingers make alternating connection. The said other contact fingers are connected across the poles of a power supply. This arrangement of parking plate and contact fingers provides an electrical (parking) switch which actuates the wiper motor to move the wiper blade into the predetermined park position, and is well known to those skilled in the art.

One of the disadvantages of this arrangement is that, during normal operation of the wiper motor, an electrical conductor connected to the contact finger which makes continuous connection with the parking plate is continuously being switched between the (opposite) poles of the power supply. Although the other end of this electrical conductor is open circuit at this time, it acts as an antenna to radiate electromagnetic noise from the wiper motor. Further, the parking plate acts as a capacitor, connected to this electrical conductor, which is alternately charged and discharged as the parking plate rotates. This tends to produce a "click" on the radio of the motor vehicle.

It is an object of the present invention to overcome the above mentioned disadvantages.

To this end, a wiper motor in accordance with the present invention comprises an electric motor; an output gear connected to, and rotatable by, the electric motor; a parking plate secured to the output gear for rotation therewith; three contact fingers, one of which makes a continuous sliding electrical connection with the parking plate, and the others making alternating sliding electrical connection with the parking plate, the said other contact fingers being connectable across the poles of a power supply for the electric motor; and an electrical resistance electrically connected between the said one contact finger and electrical ground.

Preferably, one of said other contact fingers is electrically connected to electrical ground. In this case, the electrical resistance is also preferably electrically connected between the other of said other contact fingers and electrical ground.

The electrical resistance is preferably in the form of a layer of electrically resistive material positioned between and secured to the output gear and the parking plate, and in electrical connection with the parking plate. In this case, the layer of electrically resistive material has preferably been formed by spraying. Alternatively, the layer of electrically resistive material may have been defined by a mat.

As an alternative to the electrical resistance being on the output gear, where the contact fingers are mounted on a block of electrically insulating material, the electrical resistance is preferably in the form of a layer of electrically resistive material positioned on a side of the insulating block, and in electrical connection with the contact fingers. In this case, the layer of electrically resistive material has preferably been formed by spraying. Alternatively, the layer of electrically resistive material may have been defined by a mat.

The present invention will now be described, by way of example, with reference to the accompanying drawings, in which:-

Figure 1 is a schematic diagram of a wiper motor and its associated switching circuitry which is applicable to all wiper motors;

Figure 2 is a schematic diagram of an equivalent circuit of part of the arrangement shown in Figure 1 for a wiper motor in accordance with the present invention;

Figures 3 and 4 are end and side views respectively of an output gear and parking plate of a wiper motor in accordance with a first embodiment of the present invention;

Figure 5 is an end view of a gear box cover of a wiper motor in accordance with a second embodiment of the present invention; and

Figure 6 is a cross-sectional view on the line VI-VI of Figure 5.

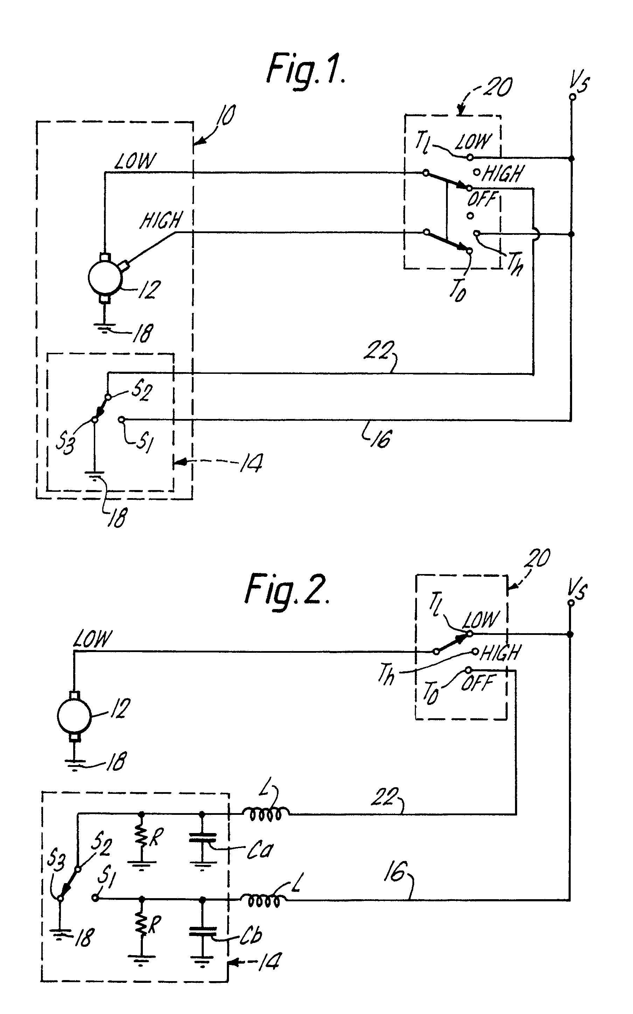

Referring to Figure 1, there is shown a typical switching circuitry for a wiper motor 10. The wiper motor 10 comprises an electric motor 12 and a parking switch 14 having switch terminals $S_1$, $S_2$, and $S_3$. The parking switch 14 and switch terminals $S_1$, $S_2$, and $S_3$ are defined by a parking plate and three contact fingers, as described in more detail

hereinafter. Switch terminal $S_1$ is connected by electrical conductor 16 to a supply voltage $V_s$, and switch terminal $S_3$ is connected to electrical ground 18. Supply voltage $V_s$ and electrical ground define the poles of a power supply for the electric motor 12.

The switching circuitry also includes a manually-operable switch 20 for actuating the wiper motor 10. The manually-operable switch 16 has three positions, OFF, HIGH, and LOW. The HIGH position is for fast operation of the wiper mechanism (not shown) associated with the wiper motor, and the LOW position is for slow operation of the wiper mechanism. It will be appreciated that in some applications, the HIGH and LOW positions may be replaced by a single ON position.

The OFF terminal $T_o$ of the manually-operable switch 20 is connected the switch terminal $S_2$ of the parking switch 14 by electrical conductor 22. The HIGH and LOW terminals $T_h$ and $T_l$ respectively of the manually-operable switch 14 are connected to the supply voltage $V_s$.

The above described circuitry is typical of that used to operate a wiper motor. With the manually-operable switch 20 in either the HIGH or LOW position, the electric motor 12 is driven to operate the wiper mechanism (not shown), and the parking plate of the parking switch 14 continuously rotates to connect switch terminal $S_2$ either to switch terminal $S_1$ or to switch terminal $S_3$. During actuation of the electric motor 12, the switch terminal $S_2$ is therefore continuously switched between the supply voltage $V_s$ and electrical ground 18. When the manually-operable switch 20 is moved to the OFF position, the electric motor 12 continues to operate (to park the wiper blade) until the connection between switch terminals $S_2$ and $S_1$ is broken, at which time switch terminal $S_2$ is connected to electrical ground 18 by way of switch terminal $S_3$. This arrangement provides an electrical ground across the electric motor 12, causing it to stop rapidly, and hence ensures the wiper blade is parked in the (same) predetermined parking position after each operation.

As mentioned above, switch terminal $S_2$, and hence electrical conductor 22, is continuously being switched between the supply voltage $V_s$ and electrical ground 18 during operation of the electric motor 12. The other end of the electrical conductor 22 is connected to the OFF terminal $T_o$ of the manually-operable switch 20, and hence is open circuit at this time. However, in most applications, the length of the electrical conductor 22 is usually in excess of 0.5 metres, and as a consequence, the electrical conductor acts as an antenna to radiate electromagnetic noise from the electric motor 12. To a lesser extent, electrical conductor 16 also acts as an antenna. An equivalent circuit of this problem can be seen in Figure 2. Here, the antenna effect of the electrical conductors 16,22 is highlighted by inductors L. For a typical conductor length of 770mm, an electrical conductor would act as a quarter wave antenna resonating at 97 MHz, the centre of the FM broadcast band.

Another problem to be taken into consideration is the capacitive effect of the parking plate, which can be of the order of 10 to 30 pF, and is indicated by the capacitors $C_a$ and $C_b$ in Figure 2. The capacitor $C_a$ (which is due to the capacitance of the parking plate) is continuously, and alternately, charged and discharged as the electric motor 12 operates. This can generate "clicks" on the motor vehicle radio. Capacitor $C_b$ is affected by the charging and discharging of capacitor $C_a$, but has a smaller influence on generating interference.

The present invention overcomes these problems by providing an electrically resistive path from the switch terminals $S_2$ and $S_3$ (and hence, the electrical conductors 16,22) to electrical ground 18. This is indicated by the resistors R in Figure 2. The resistors R provide a discharge path for the capacitors $C_a$ and $C_b$, and reduce the efficiency of the antenna effect of the electrical conductors 16,22. A resistive value of the order of 200 ohms is adequate to meet the above requirements.

Resistors R could be provided by standard fixed resistors connected between the electrical conductors 16,22 and electrical ground 18. However, in practice, it is preferable to position the resistors R as close as possible to the parking plate in order to obtain the maximum beneficial effect on reducing or eliminating interference. As a consequence, fixed resistors are not the best solution, and also prove to be expensive compared to the other solutions offered by the present invention.

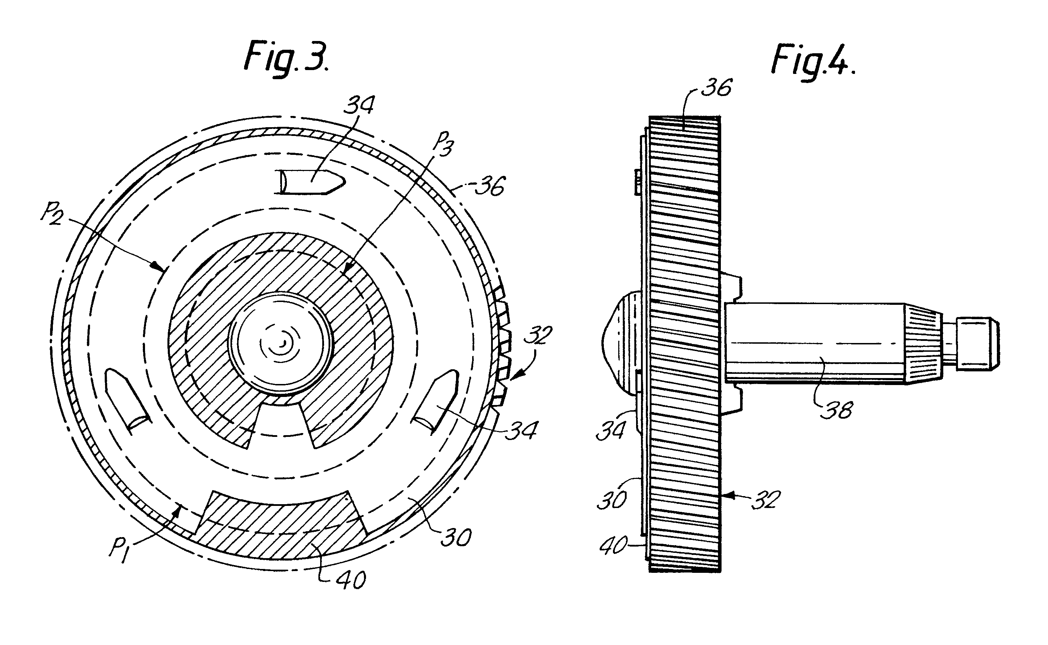

One alternative to fixed resistors is shown in Figures 3 and 4, and applies to the known form of wiper motor previously described. In this case, the parking plate 30 of electrically conductive material is secured to the output gear 32 of the wiper motor (not shown) by tabs 34. The output gear 32 has teeth 36 around its periphery for drive connection with the electric motor (not shown), and an output shaft 38 for driving the wiper mechanism. Three contact fingers (not shown, but described in more detail below) make a sliding electrical connection with the parking plate 30. As the parking plate 30 rotates, the contact fingers circumscribe the paths $P_1$, $P_2$, and $P_3$ (shown as dashed lines), which correspond to the switch terminals $S_1$, $S_2$, and $S_3$ respectively shown in Figures 1 and 2. The contact finger which defines path $P_2$ therefore remains in continuous electrical connection with the parking plate 30, and is equivalent to switch terminal $S_2$. The other contact fingers make alternating electrical connection with the parking plate 30, as in-

dicated by paths $P_1$ and $P_3$, and are equivalent to switch terminals $S_1$ and $S_3$ respectively. The contact finger which defines path $P_1$ is connected to the supply voltage $V_s$. The contact finger which defines the path $P_3$ is connected to electrical ground 18. The arrangement thus far described with reference to Figures 3 and 4 is well known, and provides the parking switch for the wiper motor.

In accordance with the present invention, positioned between the parking plate 30 and the output gear 32 is a layer 40 (illustrated by cross-hatching in Figure 3) of electrically resistive material which makes electrical contact with the parking plate. This electrically resistive layer 40 is connected to electrical ground 18 by the contact finger defining path $P_3$. With this arrangement, the electrical conductor 22 is connected to the electrically resistive layer 40 by way of the contact finger defining path $P_2$, and similarly, the electrical conductor 16 is connected to electrically resistive layer 40 by way of the contact finger defining path $P_1$, thereby providing the resistors R shown in Figure 2.

The electrically resistive layer 40 may be applied in any suitable manner, for example by spray coating (for example, with nickel or graphite) the appropriate surface of the output gear 32 with electrically resistive material before the parking plate 30 is attached, or by securing a mat of electrically resistive material between the output gear and the parking plate. Alternatively, the parking plate 30 may be secured to the output gear 32 before electrically resistive material is sprayed or otherwise attached to the output gear in the appropriate places. This arrangement has the additional advantage that the contact fingers defining the paths $P_1$ and $P_3$ are either in connection with the parking plate 30 or with the electrically resistive layer 40, and are never open circuit. This helps to eliminate the effects of bounce and short-term breaks usually experienced, and thereby provides a better switching action.

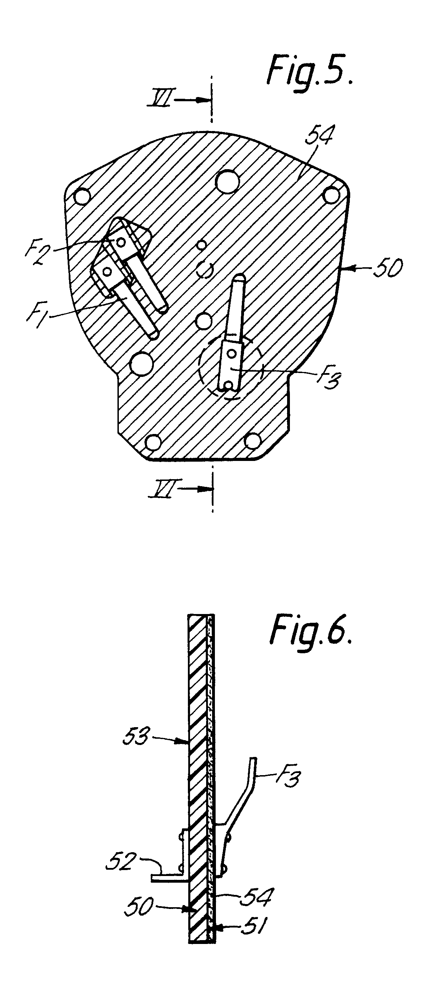

As an alternative to providing the electrically resistive path on the output gear, the electrically resistive path may be provided between the contact fingers. Such an arrangement is shown in Figures 5 and 6. In this arrangement, the contact fingers $F_1$, $F_2$, and $F_3$ (which correspond to the switch terminals $S_1$, $S_2$, and $S_3$ respectively) are mounted on one side 51 of a block 50 of electrically insulating material (which usually defines part of a cover for the output gear of the wiper motor), and project away from the insulating block 50 to make sliding electrical connection (due to the resilience of the contact fingers) with the parking plate as in Figures 3 and 4. Mounted on the other side 53 of the insulating block 50, and in electrical connection with the contact fingers $F_1$, $F_2$, and $F_3$,

are suitable terminals 52 for connection with the electrical conductors 16, 22, and electrical ground 18 respectively. The arrangement thus far described with respect to Figures 5 and 6 is well known.

In accordance with the present invention, a layer 54 of electrically resistive material is positioned on said one side 51 of the insulating block 50, and makes electrical connection with the contact fingers $F_1$, $F_2$, and $F_3$. Contact finger $F_3$ connects the electrically resistive layer 54 to electrical ground 18, and contact fingers $F_1$ and $F_2$ connect the electrically resistive layer 54 to the electrical conductors 16 and 22 respectively to provide the resistors R shown in Figure 2. The electrically resistive layer 54 may be provided by spray coating or a mat as described above with reference to Figures 3 and 4. As a further alternative, the electrically resistive layer may be positioned on the said other side 53 of the insulating block 50. The arrangements described with reference to Figures 5 and 6 have an additional advantage that no wear of the electrically resistive layer can occur as the electrically resistive layer is positioned on a stationary part of the wiper motor.

As a still further alternative for providing the resistors R, the output gear (shown in Figures 3 and 4) may be moulded from electrically insulating material containing a suitable proportion of electrically resistive filler, such as carbon or graphite.

## Claims

1. A wiper motor comprising an electric motor (12); an output gear (32) connected to, and rotatable by, the electric motor; a parking plate (30) secured to the output gear for rotation therewith; and three contact fingers ($P_1$-$P_3$, $F_1$-$F_3$), one ($P_2$, $F_2$) of which makes a continuous sliding electrical connection with the parking plate, and the others making alternating sliding electrical connection with the parking plate, the said other contact fingers being connectable across the poles of a power supply ($V_s$) for the electric motor; characterised by an electrical resistance (40,54) electrically connected between the said one contact finger ($P_2$, $F_2$) and electrical ground (18).

2. A wiper motor as claimed in Claim 1, wherein one ($P_3$, $F_3$) of said other contact fingers is electrically connected to electrical ground (18).

3. A wiper motor as claimed in Claim 2, wherein the electrical resistance (40,54) is also electrically connected between the other ($P_1$, $P_3$, $F_1$, $F_3$) of said other contact fingers and electrical ground (18).

4. A wiper motor as claimed in Claim 2 or Claim 3, wherein the electrical resistance is in the form of a layer (40) of electrically resistive material positioned between and secured to the output gear (32) and the parking plate (30), and in electrical connection with the parking plate.

5. A wiper motor as claimed in Claim 4, wherein the layer (40) of electrically resistive material has been formed by spraying.

6. A wiper motor as claimed in Claim 4, wherein the layer (40) of electrically resistive material is defined by a mat.

7. A wiper motor as claimed in Claim 2 or Claim 3, wherein the contact fingers ($F_1$-$F_3$) are mounted on a block (50) of electrically insulating material, and wherein the electrical resistance is in the form of a layer (54) of electrically resistive material positioned on a side (51) of the insulating block, and in electrical connection with the contact fingers.

8. A wiper motor as claimed in Claim 7, wherein the layer (54) of electrically resistive material has been formed by spraying.

9. A wiper motor as claimed in Claim 7, wherein the layer (54) of electrically resistive material is defined by a mat.

10. A wiper motor as claimed in claim 2 or claim 3, wherein the electrical resistance is in the form of a resistive material which is included as an additive in the output gear (32) to form a resistive path between each contact finger and electrical ground (18).

Fig.1.

Fig.2.

Fig.4.

Fig.3.

Fig.5.

F2

F1

54

50

F3

Fig.6.

53

F3

52

50

54

51